# EUROPÄISCHE PATENTSCHRIFT

(11) **EP 1 665 023 B1**
(45) Veröffentlichungstag und Bekanntmachung des Hinweises auf die Patenterteilung: **04.04.2012**
(21) Anmeldenummer: 04786796.5
(22) Anmeldetag: 16.09.2004
(51) Int. Cl.: G06F 3/048, G06F 3/01, G06F 3/033

(54) **VERFAHREN UND VORRICHTUNG ZUR STEUERUNG EINES GRAPHIKSYSTEMS DER VIRTUELLEN REALITÄT MITTELS INTERAKTIONEN**
METHOD AND DEVICE FOR CONTROLLING A VIRTUAL REALITY GRAPHIC SYSTEM USING INTERACTIVE TECHNIQUES
PROCEDE ET DISPOSITIF DE COMMANDE D'UN SYSTEME GRAPHIQUE DE REALITE VIRTUELLE PAR DES INTERACTIONS

(30) Priorität: 19.09.2003 DE 10343968
(43) Veröffentlichungstag der Anmeldung: 07.06.2006
(73) Patentinhaber: Icido Gesellschaft Für Innovative Informationssysteme MBH, 70565 Stuttgart (DE)
(72) Erfinder: RÖSSLER, Andreas, 70563 Stuttgart (DE); BREINING, Ralf, 72667 Schlaitdorf (DE); WURSTER, Jan, 70191 Stuttgart (DE)
(74) Vertreter: Jakelski, Joachim
(86) Internationale Anmeldenummer: PCT/DE2004/002077
(87) Internationale Veröffentlichungsnummer: WO 2005/029306

(56) Entgegenhaltungen:
- EP-A- 1 276 073
- US-A- 5 923 318
- FRANCOIS GUIMBRETIERE, TERRY WINOGRAD: "FlowMenu: Combining Command, Text, and Data Entry" UIST2000 CONFRENCE PROCEEDINGS, 2000, Seiten 213-216, XP002326822 SAN DIEGO
- GORDON KURTENBACH; WILLIAM BUXTON: "User Learning and Performance with Marking Menus" CHI94 CONFERENCE PROCEEDINGS, April 1994 (1994-04), Seiten 258-264, XP002326821 MASSACHUSETTS

## Beschreibung

Die vorliegende Erfindung betrifft allgemein Graphiksysteme für Anwendungen der virtuellen Realität (VR) und im speziellen ein Verfahren und eine Vorrichtung zur Steuerung eines solchen VR-Graphiksystems mittels Interaktionen gemäß den Oberbegriffen der jeweiligen unabhängigen Ansprüche.

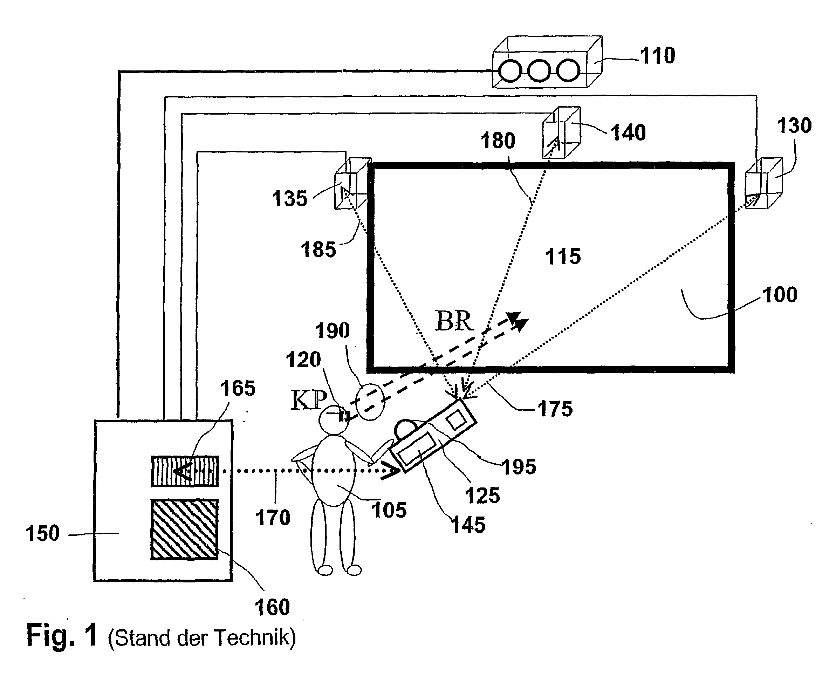

Ein hier betroffenes VR-Graphiksystem geht bspw. aus der DE 101 25 075 A1 hervor und dient zur Erzeugung und Darstellung einer Vielzahl von räumlichen Ansichten, die gemeinsam eine virtuell-räumliche (dreidimensionale) Szene darstellen. Die entsprechende Visualisierung einer solchen Szene erfolgt dabei meistens mittels stereoskopischer Projektion auf eine Leinwand oder dgl. Bereits relativ weit verbreitet sind sogenannte immersive VR-Systeme, welche eine intuitive Mensch-Maschine-(Benutzungs-)Schnittstelle für die verschiedenen Anwendungsbereiche (Fig. 1) bilden. Die genannten Graphiksysteme binden den Anwender bzw. Benutzer stark in die visuelle Simulation mittels eines Computersystems ein.

Dieses Eintauchen des Benutzers wird als "Immersion" oder "immersive Umgebung" bezeichnet.

Durch die maßstäbliche Darstellung dreidimensionaler Daten oder Objekte und die ebenfalls dreidimensionale Interaktionsfähigkeit können diese Daten oder Objekte weitaus besser beurteilt und erlebt werden, als es mit klassischen Visualisierungs- und Interaktionstechniken wie bspw. mit einem 2D-Monitor und einer entsprechend zweidimensionalen graphischen Benutzungsoberfläche möglich ist. So können in der Produktentwicklung viele physisch-reale Modelle und Prototypen durch virtuelle Prototypen ersetzt werden. Ähnliches gilt für Planungsaufgaben bspw. im Architekturbereich. Auch Funktionsprototypen lassen sich in immersiven Umgebungen wesentlich realistischer evaluieren, als es mit den klassischen Methoden möglich ist.

Die Steuerung einer solchen VR-Simulation erfolgt rechnergestützt mittels geeigneter Eingabegeräte (verallgemeinernd im folgenden als "Interaktionsgeräte" bezeichnet, da deren Funktion über die reine Dateneingabe hinaus geht), die neben Tastern über einen Lagesensor verfügen, mittels dessen die räumliche Position und Orientierung des Interaktionsgeräts ebenfalls kontinuierlich gemessen werden kann, um die Interaktionen mit den szenisch dargestellten Daten (Szenendaten) auszuführen. Ein solches Interaktionsgerät sowie eine entsprechende räumliche Benutzungsschnittstelle sind bspw. in der DE 101 32 243 A1 offenbart. Das dort beschriebene handgehaltene, kabellose Interaktionsgerät dient zur Erzeugung und Übermittlung von Orts-, Lage- und/oder Bewegungsdaten (d.h. räumlichen Lagekoordinaten des Interaktionsgeräts) zur räumlich-virtuellen Navigation in der genannten Szene und in etwaigen Funktionselementen der Benutzungsschnittstelle sowie zur Manipulation von virtuellen Objekten der Szene. Das Interaktionsgerät weist dazu einen Sensor auf, der mit einer in dem VR-Graphiksystem vorgesehenen Lageerfassungssensorik über eine Funkverbindung zusammenwirkt. Die genannten Lagedaten umfassen die möglichen sechs Freiheitsgrade der Translation und der Rotation des Interaktionsgeräts und werden zur Ermittlung einer Bewegungs- oder Raumtrajektorie des Interaktionsgeräts in Echtzeit rechnergestützt ausgewertet.

Benutzergeführte Interaktionen lassen sich grds. in einen logischen Teil und einen physischen Teil unterteilen. Der logische Teil ist die virtuell-räumliche Benutzungsschnittstelle und beinhaltet bspw. die Darstellung von Funktionen oder Menüs, die Methode der Selektion von Objekten oder Funktionsmodi und die Art der Navigation. Der physische Teil entspricht der gerätetechnischen Realisierung, wie der technischen Gestaltung des Interaktionsgeräts und die eingesetzte Projektionstechnologie zur Darstellung der Szene.

Hinsichtlich der Verwendung der genannten Interaktionsgeräte ist es wünschenswert, daß die genannten Interaktionen, insbesondere komplexere Interaktionen wie die Funktionsauswahl oder Menüsteuerung, technisch möglichst einfach und dennoch möglichst bedienungs- und betriebssicher steuerbar sind.

Die Erfindung schlägt daher ein Verfahren und eine Vorrichtung zur Steuerung eines hier betroffenen Graphiksystems der virtuellen Realität (VR) mittels der genannten Interaktionen vor, bei denen der Erfindungsgedanke zugrundeliegt, zunächst ein auf der Raum- bzw. Bewegungstrajektorie des Interaktionsgeräts angeordnetes Referenzsystem zu bilden und nachfolgende Interaktionen anhand dieses Referenzsystems auszuwerten.

Die Besonderheit des erfindungsgemäßen Verfahrens liegt demnach darin, daß durch eine erste Interaktion des Benutzers ein zunächst fixer Initialraumpunkt, bevorzugt zusammen mit einem zugeordneten Referenzkoordinatensystem auf der Raumtrajektorie des Interaktionsgeräts festgelegt werden und daß wenigstens eine nachfolgende Interaktion mittels des Interaktionsgeräts relativ zu dem festgelegten Initialraumpunkt bzw. dem zugehörigen Referenzkoordinatensystem ausgewertet wird.

In einer weiteren Ausgestaltung ist vorgesehen, daß der Initialraumpunkt den Nullpunkt bzw. Ursprung des genannten Referenzkoordinatensystems darstellt und in diesem Koordinatensystem Referenz- bzw. Schwellwerte vorgegeben werden, bei deren Überschreitung durch die momentane Raumposition oder Raumorientierung des Interaktionsgeräts eine bestimmte Funktion oder eine bestimmte Menüauswahl der virtuellen, in die aktuelle Szene eingeblendeten Benutzungsschnittstelle erfolgt. Diese Referenzwerte liegen bevorzugt auf der Oberfläche eines bzgl. des Initialraumpunktes symmetrisch (gedacht) angeordneten geometrischen Körpers, bspw. auf einer Kugeloberfläche, einer Ellipsoidoberfläche, einer Würfeloberfläche, einer Quaderoberfläche, einer Tetraederoberfläche oder dgl. Die Referenzpunkte können ferner in bestimmten Raumrichtungen gewichtet sein, um bestimmten Funktionen oder Menüauswahlpunkten unterschiedliche Sensitivitäten bei der räumlichen Interaktion entlang der realen Raumtrajektorie des Interaktionsgeräts zuzuordnen, wodurch Fehlbedienungen oder Fehleingaben seitens eines Benutzers noch wirksamer vermieden werden.

In einer anderen Ausgestaltung ist wenigstens ein weiterer Schwellwert vorgesehen, dessen Wert betragsmäßig größer ist als der genannte wenigstens eine Referenzwert und bei dessen Überschreitung durch die momentane Raumposition des Interaktionsgeräts bewirkt wird, daß sich das Referenzkoordinatensystem bzw. der Initialraumpunkt zu der neuen Raumposition hinbewegt. Dies hat den Vorteil, daß die genannte vorteilhafte Wirkungsweise des Referenzkoordinatensystems bei der genannten Funktions- oder Menüauswahl auch bei (versehentlich) zu starken Positionsänderungen des Interaktionsgeräts bestehen bleibt.

Die erfindungsgemäß vorgeschlagene Vorgehensweise bzw. die ebenfalls vorgeschlagene Benutzungsschnittstelle bieten insbesondere den Vorteil, daß auch komplexe Interaktionen bspw. über mehrere Funktions- oder Menüebenen sehr intuitiv, und zwar ausschließlich durch räumliche Bewegung des Interaktionsgeräts erfolgen können. Lediglich die Festlegung des ersten Initialraumpunktes hat durch eine besondere Interaktion zu erfolgen, bevorzugt mittels eines an dem Interaktionsgerät angeordneten Steuerelementes wie bspw. einen Taster oder dgl. Darüber hinaus wird die Steuerung der Benutzungsschnittstelle durch die fortwährende Auswertung der genannten Trajektorie des Interaktionsgeräts gegenüber den im Stand der Technik bekannten Interaktionssystemen in der Handhabung einfacher und sogar betriebssicherer.

Die Steuerung des VR-Graphiksystems mittels des Interaktionsgeräts sowie einer in die jeweilige Szene visuell eingeblendeten Benutzungsoberfläche erfolgt bevorzugt entweder über eine räumlich-visuell dargestellte Funktionsauswahl oder ein Menüsystem, wie das bspw. in der DE 101 32 243 A1 beschriebene Kugelmenü.

Die Erfindung ist mit den genannten Vorteilen einsetzbar bei kabellosen sowie kabelgebundenen Interaktionsgeräten, die bevorzugt von dem Benutzer handgeführt sind. Es ist hervorzuheben, daß die möglichen Interaktionen, neben der genannten Verwendung des Interaktionsgeräts einschließlich des genannten Steuerelementes (Tasters), auch durch akustische oder optische Interaktionen bspw. durch Sprache, Gestik oder dgl. erfolgen können. Dabei können die in der Dissertationsschrift von A. Rößler mit dem Titel "Ein System für die Entwicklung von räumlichen Benutzungsschnittstellen" der Universität Stuttgart, erschienen im Jost Jetter Verlag, Heimsheim insbesondere auf den dortigen Seiten 72 ff. (Kap. 4.3.2 ff.) ausführlich beschriebenen Eingabemethoden zur Anwendung kommen. So können neben der Verwendung des genannten Interaktionsgeräts zusätzlich die dort beschriebenen Interaktionsmodi wie eine direkte und indirekte, mittelbare und unmittelbare sowie absolute und relative Eingabe eingesetzt werden, um bspw. eine ereignisorientierte Interpretation von Bewegungen des Interaktionsgeräts oder eines Körperteils des Benutzers zu ermöglichen.

Bei der genannten Interpretation von Gesten seitens des Benutzers lassen sich zudem statische und dynamische Gesten unterscheiden, wobei bei dynamischen Gesten die zeitliche Abfolge einer Bewegung und bei statischen Gesten eine relative Position oder Orientierung zwischen bspw. einzelnen Körperteilen des Benutzers analysiert wird. Ferner lassen sich einfache Eingabeereignisse von interpretierten und kombinierten Eingabeereignissen unterscheiden, wobei einfache Eingabeereignisse durch diskrete Aktionen des Benutzers, wie bspw. die Betätigung des genannten Tasters, ausgelöst werden, wohingegen bei interpretierten Ereignissen diese dynamisch interpretiert werden, bspw. unter Berücksichtigung einer Zeitmessung wie bspw. bei einem doppelten Tastendruck ("Doppelklick"). Diese beiden Eingabemodi können schließlich beliebig kombiniert werden, bspw. ein Tastendruck mit einer Hand-, Kopf- oder Gesichtsgeste.

Das erfindungsgemäße Verfahren und die Vorrichtung werden nachfolgend anhand von in der Zeichnung dargestellten Ausführungsbeispielen beschrieben, aus denen sich weitere Merkmale und Vorteile der Erfindung ergeben. Hierin sind identische oder funktional gleiche Merkmale mit übereinstimmenden Bezugszeichen referenziert.

In der Zeichnung zeigen
- Fig. 1: eine vereinfachte Übersichtsdarstellung eines hier betroffenen immersiven VR-(Virtual-Reality)Graphiksystems;
- Fig. 2a-c: bei der physisch-räumlichen Bewegung eines in der Fig. 1 gezeigten Interaktionsgeräts typischerweise sich ergebende Raumtrajektorien zur Illustration der erfindungsgemäßen Vorgehensweise bei der Auswertung dieser Trajektorien; und
- Fig. 3: die Illustration einer erfindungsgemäßen Routine zur Steuerung eines hier betroffenen Interaktionsgeräts anhand eines Flußdiagramms.

Das in der Fig. 1 schematisch dargestellte VR-Graphiksystem weist einen Projektionsschirm 100 auf, vor dem eine Person (Benutzer) 105 steht, um die dortige über einen Projektor 110 erzeugte Szene 115 mittels einer stereoskopischen Brille 120 zu betrachten. Anstelle der stereoskopischen Brille 120 können vorliegend selbstverständlich auch auto-stereoskopische Bildschirme oder dgl. zur Anwendung kommen. Zudem können der Projektionsschirm 100, der Projektor 110 sowie die Brille 120 vorliegend durch einen an sich bekannten Datenhelm ersetzt werden, welcher dann alle drei Funktionen beinhaltet.

Der Benutzer 105 hält ein Interaktionsgerät 125 in der Hand, um bevorzugt absolute Lagedaten wie die räumliche Position und Orientierung des Interaktionsgeräts im physischen Raum zu erzeugen und an eine Lageerfassungssensorik 130 - 140 zu übermitteln. Alternativ können allerdings auch relative oder differentielle Lagedaten verwendet werden, worauf es in dem vorliegenden Zusammenhang aber nicht ankommt.

Das Interaktionsgerät 125 umfaßt ein Lageerkennungssystem 145, bevorzugt eine Anordnung von optischen Messystemen 145, mittels derer sowohl die Absolutwerte der drei möglichen Drehwinkel als auch die Absolutwerte der in den möglichen drei Raumrichtungen möglichen translatorischen Bewegungen des Interaktionsgeräts 125 erfaßt und von einem Digitalrechner 150 in der nachfolgend beschriebenen Weise in Echtzeit verarbeitet werden. Alternativ können diese Lagedaten mittels Beschleunigungssensoren, Gyroskopen oder dgl. erfaßt werden, welche dann i.d.R. nur relative oder differentielle Lagedaten liefern. Da es auf diese Sensorik vorliegend nicht ankommt, wird hier von einer eingehenderen Beschreibung abgesehen und auf die eingangs genannten Druckschriften verwiesen.

Die genannten absoluten Lagedaten werden von einem mit dem Interaktionsgerät 125 verbundenen Rechnersystem erzeugt. Sie werden dazu an einen Mikroprozessor 160 eines Digitalrechners 150 übertragen, in dem unter anderem die notwendigen als dem Fachmann geläufig anzunehmenden graphischen Auswerteprozesse zur Erzeugung der stereoskopischräumlichen Szene 115 ausgeführt werden. Die räumliche Szenendarstellung 115 dient insbesondere der Visualisierung von Objektmanipulationen, der räumlichen Navigation in der gesamten Szene sowie der Darstellung von Funktionsauswahlstrukturen und/oder Menüstrukturen.

Das Interaktionsgerät 125 ist in dem vorliegenden Ausführungsbeispiel mit dem Digitalrechner 150 mittels eines dort angeordneten Empfangsteils 165 über eine Funkverbindung 170 datenleitend verbunden. Die von den Sensoren 145 an die Lageerfassungssensorik 130 -140 übertragenen Lagedaten werden ebenfalls drahtlos per Funkstrecken 175 - 185 übertragen.

Zusätzlich eingezeichnet sind die Kopfposition (KP) des Benutzers 105 sowie dessen Blickrichtung (BR) 190 auf den Projektionsschirm 100 bzw. die dort projizierte Szene 115. Diese beiden Größen sind insoweit für die Berechnung einer aktuellen stereoskopischen Projektion von Bedeutung, als sie die notwendige Szenenperspektive wesentlich mitbestimmen, da die Perspektive in an sich bekannter Weise auch von diesen beiden Größen abhängt.

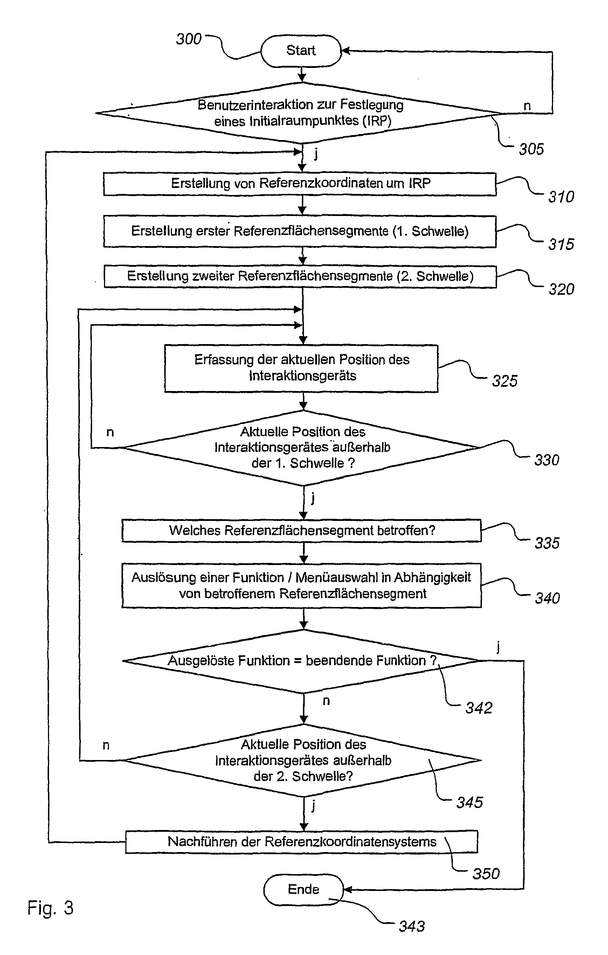

Das Interaktionsgerät 125 umfaßt in dem vorliegenden Ausführungsbeispiel einen Taster 195, mittels dessen der Benutzer 105, zusätzlich zu den genannten Bewegungsmöglichkeiten des Interaktionsgeräts 125 im Raum, mechanisch eine Interaktion auslösen kann, wie nachfolgend anhand der Fig. 3 beschrieben. Es versteht sich, daß alternativ auch zwei oder mehrere Taster angeordnet sein können, um ggf. unterschiedliche Interaktionen zu ermöglichen.

Das zentrale Element des gezeigten immersiven VR-Graphiksystems ist die mittels der Lageerfassungssensorik 130 - 140 geführte (getrackte) stereoskopische Darstellung der jeweiligen dreidimensionalen Szenendaten 115. Die Perspektive der Szenendarstellung ist dabei vom Betrachter-Standpunkt bzw. von der Kopfposition (KP) und der Blickrichtung (BR) abhängig. Die Kopfposition (KP) wird dazu über ein (hier nicht dargestelltes) dreidimensionales Positionsmeßsystem kontinuierlich gemessen und die Geometrie der Sichtvolumina für beide Augen entsprechend dieser Positionswerte angepaßt. Dieses Positionsmeßsystem umfaßt eine ähnliche Sensorik wie das genannte Lageerfassungssystem 130 -140 und kann ggf. in dieses integriert sein. Für jedes Auge wird ein separates Bild aus der jeweiligen Perspektive berechnet. Der Unterschied (Disparität) bewirkt die stereoskopische Tiefenwahrnehmung.

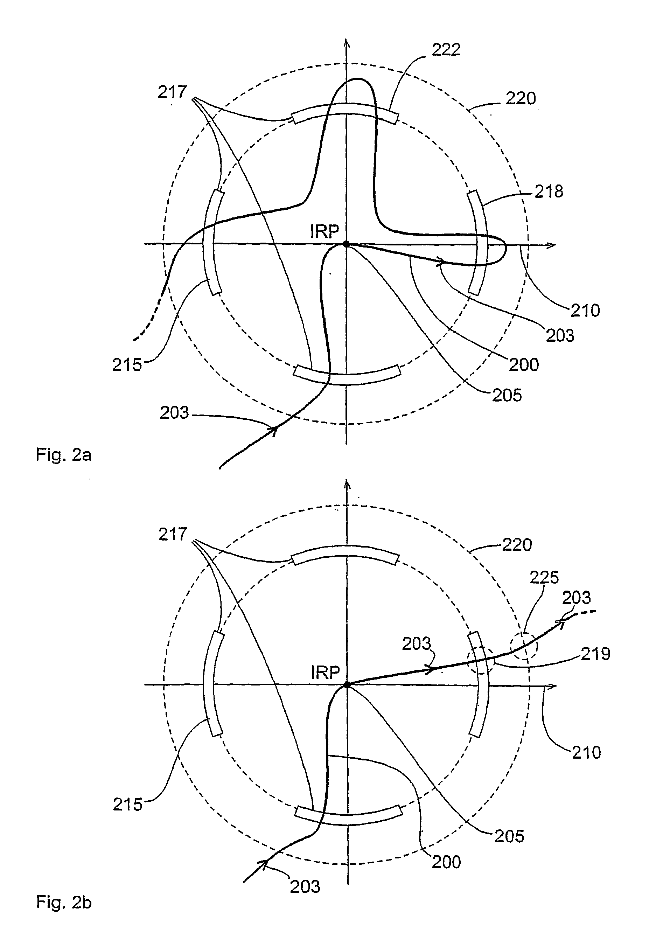

Als Interaktion vorliegend seitens eines Benutzers wird jede Aktion des Benutzers bevorzugt mittels des genannten Interaktionsgeräts 125 verstanden. Umfaßt sind dabei die Bewegung des Interaktionsgeräts 125 auf einer in den Figuren 2a - 2c gezeigten Raumtrajektorie und die Betätigung eines oder mehrerer an dem Interaktionsgerät 125 angeordneten Taster 195. Zusätzlich umfaßt sein können akustische Aktionen des Benutzers wie bspw. eine Spracheingabe oder eine durch Gestik bestimmte Aktion.

In den Figuren 2a - 2c sind nun typische, bei der Bewegung des vorbeschriebenen Interaktionsgeräts 125 sich ergebende Raumtrajektoren 200 dargestellt. Es ist hervorzuheben, daß in den Figuren 2a - 2c zu Vereinfachungszwecken nur ein zweidimensionaler Schnitt des eigentlich dreidimensionalen Ansatzes gezeigt ist. Dabei sind bspw. darzustellende Kugelschalen zu Linien entartet. Die jeweilige Bewegungsrichtung entlang des Trajektorienverlaufs ist durch Pfeile 203 angedeutet. Es sei angenommen, daß der in dieser Darstellung nicht gezeigte Benutzer 105 jeweils am Punkt 205 sowie den Punkten 205', 205", 205'" der Trajektorie bspw. mittels des Tasters 195 dem VR-Graphiksystem (Fig. 1) signalisiert, daß ein Initialraumpunkt (IRP) 205 mit einem zugeordneten Referenzkoordinatensystem 210 festgelegt werden soll. Die dem IRP entsprechenden und, wie vorbeschrieben, mittels der Lageerfassungssensorik 130 - 140 bestimmten Raumkoordinaten werden dabei per Funk an den Digitalrechner 150 übermittelt. Fortan werden die weiteren Punkte auf der Trajektorie 200 in Relation zu diesem IRP, quasi in neuen Relativkoordinaten, berechnet.

Gleichzeitig mit der Festlegung des Referenzkoordinatensystems 210 werden zwei um den IRP 205 angeordnete Schalen berechnet, und zwar eine innere Schale 215 mit entsprechenden Schalensegmenten 217 sowie eine zusammenhängende, d.h. nicht in solche Schalensegmente unterteilte äußere Schale 220. Es ist hervorzuheben, daß die gezeigten Schalen im technischen Sinne nur Hilfsmittel bei der Berechnung der genannten Schwellwerte bzw. bei der Berechnung bzw. Erfassung des Überschreiten dieser Schwellwerte durch die Raumtrajektorie des Interaktionsgeräts 125 darstellen und diese Schalen daher in der Szene visuell nicht in Erscheinung treten. Die innere Schale 215 definiert den eingangs genannten ersten Schwellwert, wohingegen die äußere Schale den genannten zweiten Schwellwert repräsentiert.

Die genannten Schalensegmente 217 der inneren Schale 215 dienen dazu, daß bei ihrem Durchstoßen von der Trajektorie 200 automatisch Aktionen bevorzugt in einem Menüsystem einer in der gegenwärtigen Szene visualisierten Benutzungsoberfläche ausgelöst werden, und zwar Aktionen wie das Öffnen eines neuen Menüpunktes oder die Selektion einer Funktion oder eines Funktionsmodus aus einer Vielzahl angebotener Funktionen bzw. Funktionsmodi. Als Menüsystem kommen grds. alle bekannten und denkbaren Erscheinungsformen in Betracht, wie bspw. kugel- oder ellipsoidbasierte Menüs, würfel- oder quader-basierte Menüs oder flach ausgebildete transparente Textmenüs. Die genaue Funktionsweise solcher Menüsysteme zur Selektion von Funktionsmodi oder dgl. ist in den beiden eingangs genannten Druckschriften ausführlich beschrieben und daher werden diese Druckschriften in dem vorliegenden Zusammenhang insoweit vollumfänglich in Bezug genommen.

Der in der Fig. 2a gezeigte Trajektorienverlauf entspricht einem Szenario, bei dem der Benutzer während der Bewegung des Interaktionsgeräts 125 den Taster 195 betätigt, um eine Menüauswahl durchzuführen. In diesem Fall bewirkt das Betätigen des Tasters auch, daß in die Szene 115 visuell ein Menüsystem eingeblendet wird. Die genaue Position dieser Einblendung auf dem Projektionsschirm 100 wird in Abhängigkeit von der Blickrichtung (BR) 190 und/oder der Kopfposition (KP) des Benutzers 105 festgelegt. Dabei kann vorgesehen sein, daß die Blickrichtung (BR) und/oder die Kopfposition (KP) kontinuierlich oder zeitweilig erfasst wird und daß die genaue Position, an der das Menüsystem oder das Funktionsauswahlsystem eingeblendet wird, in Abhängigkeit von der erfassten Blickrichtung (BR) und/oder der erfassten Kopfposition (KP) bestimmt wird.

In dem vorliegenden Ausführungsbeispiel handelt es sich aus Symmetriegründen (Kugelsymmetrie der oben beschriebenen Schalen) ebenfalls bevorzugt um ein kugelsymmetrisches Menüsystem wie bspw. ein Kugelmenü. Es versteht sich, daß die in den Figuren 2a - 2c gezeigten Kugelschalen nur beispielhaft sind und auch durch würfelförmige, quaderförmige oder ellipsoide Schalen gebildet sein können. So bieten sich kubisch-symmetrische Schalenformen bspw. bei ebenfalls kubischsymmetrischen (würfelförmigen, quaderförmigen oder textförmigen) Menüsystemen an.

Die in der Fig. 2a gezeigte Trajektorie 200 durchstößt die innere Schale 215 zum ersten Mal im Bereich eines ersten Kugelschalensegments 218. Dadurch wird eine erste Menü- oder Funktionsauswahl ausgelöst. Die Trajektorie 200 tritt danach in Höhe dieses Segments 218 wieder in den Innenbereich der Schale 215 ein, um diese in Höhe eines zweiten Kugelschalensegments 222 erneut zu durchstoßen und damit eine weitere Funktionsauswahl auszulösen. Auf den weiteren durch Punkte angedeuteten Verlauf der Trajektorie 200 kommt es vorliegend nicht mehr an.

Es versteht sich, daß die in den Figuren 2a - 2c gezeigten Schwellwertflächen in der einfachsten Ausgestaltung auch durch skalare Schwellwerte gebildet sein können, bspw. im Falle eines kubischen Referenzkoordinatensystems anstelle des hier gezeigten kugelförmigen Koordinatensystems, wobei in jeder der drei Raumrichtungen nur ein einziger skalarer Schwellwert festgelegt werden muß.

In der Fig. 2b ist ein Trajektorienverlauf dargestellt, bei dem die Trajektorie 200 nach der Festlegung des IRP 205 zunächst die innere Schale 215 im Bereich eines Kugelschalensegments 219 durchstößt, wodurch wiederum eine Funktionsauswahl oder dgl. ausgelöst wird. Im Unterschied zur Fig. 2a durchstößt die Trajektorie im Anschluß daran auch die äußere Schale, und zwar in dem gezeigten Punkt 225. Dieses Durchstoßen der äußeren Schale bewirkt das bereits genannte automatische Nachführen des Referenzkoordinatensystems 210, wobei in dem vorliegenden Ausführungsbeispiel der IRP 205 zum genannten Durchstoßpunkt, d.h. vorliegend zum Punkt 225, verschoben wird.

In einer alternativen Ausgestaltung folgt der IPR inkrementell (d.h. in inkrementell Schritten bzw. nahezu sukzessive) der Trajektorie, wobei entweder die äußere Schale zu einer Schale mit einem geringeren Durchmesser als die innere Schale entartet ist oder wobei der IPR ab dem genannten Durchstoßpunkt 225 der weiterführenden Trajektorie jeweils inkrementell folgt. Wie bereits gesagt, weist die äußere Schale keine Segmentierung auf, da durch sie keine benutzungsspezifischen Ereignisse ausgelöst werden sollen, sondern lediglich das genannte Nachführen des gesamten Referenzkoordinatensystems 210.

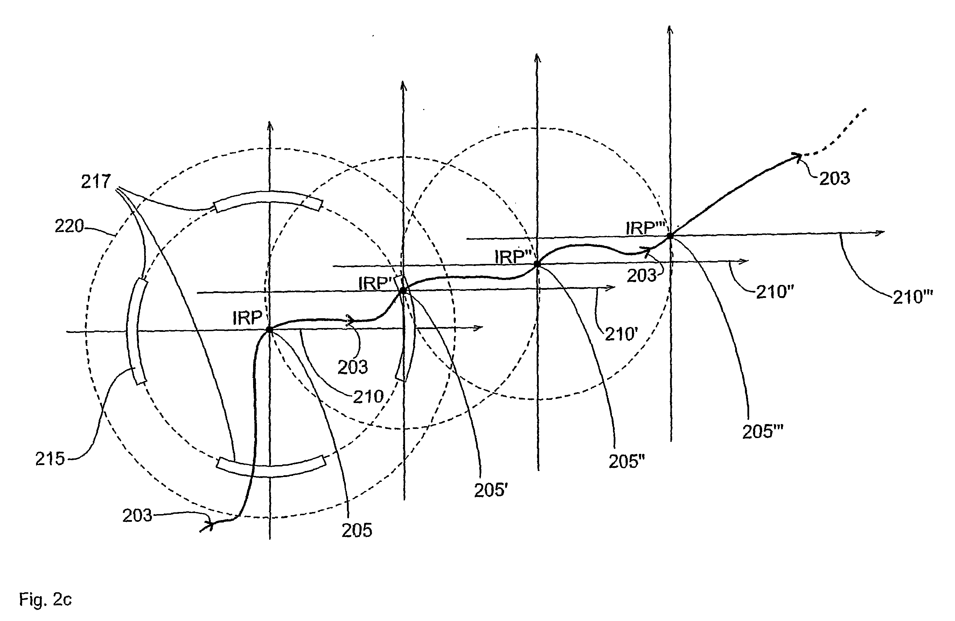

Anhand der Fig. 2c soll schließlich illustriert werden, was geschieht, wenn das Interaktionsgerät 125 nach einer bereits erfolgten Festlegung eines IRP 205 über einen längeren Weg bewegt wird, bspw. dadurch bedingt, daß sich der Benutzer nach einer bereits erfolgten Aktivierung eines Menüsystems vor dem Projektionsschirm 100 über einen größeren Weg bewegt. Wie aus der vorhergehenden Beschreibung folgt, bewirkt das wiederholte Verlassen der äußeren Schale 220 ein wiederholtes, in dem vorliegenden Ausführungsbeispiel dreimaliges Nachführen des IRP 205, jeweils resultierend in IRPs 205', 205" und 205"' bzw. des diesem zugeordneten Referenzkoordinatensystems 210, jeweils resultierend in entsprechend verschobenen vorliegend gestrichelt dargestellten Referenzkoordinatensystemen 210', 210" und 210"'.

Es ist anzumerken, daß die in den Figuren 2a - 2c gezeigte physische Raumtrajektorie verallgemeinernd entweder durch eine reine Translationsbewegung oder eine reine Rotationsbewegung des Interaktionsgeräts 125 repräsentiert oder aber durch eine Kombination dieser beiden Bewegungsarten repräsentiert sein kann. Im Falle von solchen Rotationsbewegungen des Interaktionsgeräts zur Auslösung bestimmter Interaktionen mit einem vorbeschriebenen Menüsystem oder zur Manipulation von virtuellen Objekten der Szene 115 kann zusätzlich vorgesehen sein, daß die Interaktion erst dann ausgelöst wird, wenn wenigstens eine zweite Interaktion, insbesondere mittels des Steuerelementes, ausgelöst worden ist. Hierdurch wird in vorteilhafter Weise verhindert, daß bereits eine kleine möglicherweise unerwünschte Drehung des Interaktionsgeräts 125 eine Interaktion auslöst. Zudem wird ermöglicht, daß Drehungen des Interaktionsgeräts 125 wieder rückgängig gemacht werden können, ohne bereits eine Interaktion in dem VR-Graphiksystem ausgelöst zu haben.

Die Fig. 3 zeigt nun ein Ausführungsbeispiel einer erfindungsgemäßen Routine zur Auswertung des räumlichen Verlaufs einer wie in den Figuren 2a - 2c angenommenen Trajektorie. Nach dem Start 300 der Routine, der bevorzugt durch das Einschalten des VR-Graphiksystems oder durch eine etwa nachfolgende Aktivierung des Interaktionsgeräts 125 ausgelöst wird, befindet sich die Routine zunächst in einer Warteschleife, in der kontinuierlich oder zeitweilig abgefragt wird 305, ob der Benutzer eine Interaktion ausgeführt hat, um an der momentanen Raumposition des Interaktionsgeräts ggf. einen vorbeschriebenen Initialraumpunkt IRP 205 festzulegen. Diese "initiale" Interaktion erfolgt bevorzugt mittels des vorbeschriebenen Tasters 195, kann allerdings auch in der eingangs beschriebenen Weise durch Sprache, Gestik oder dgl. erfolgen.

Wird eine solche initiale Interaktion festgestellt, wird in Schritt 310 zunächst das genannte Referenzkoordinatensystem 210 bestimmt, wobei der Koordinatenursprung durch den IRP 205 gebildet wird. In anschließenden Schritten 315 und 320 werden in dem Referenzkoordinatensystem 210 die Referenzpunkte oder Referenzflächensegmente 217 der genannten ersten Schwelle 215 sowie die zweite Schwellenfläche 220 bestimmt.

An die genannten Schritte schließt sich wieder eine Schleife an, in der zunächst die aktuelle Position des Interaktionsgeräts 125 erfaßt wird 325. Danach wird geprüft 330, ob der erfaßte Wert der aktuellen Position außerhalb des genannten ersten Schwellenwerts bzw. des Wertes des vorliegenden Referenzflächensegments 217 liegt. Ist diese Bedingung 330 nicht erfüllt, dann springt die Routine zurück zu Schritt 325, um einen neuen aktuellen Positionswert des Interaktionsgeräts 125 zu erfassen. Ist die Bedingung 330 allerdings erfüllt, dann hat die Trajektorie die erste Schwellenfläche 215 durchstoßen. In diesem Fall wird zunächst noch geprüft 335, welcher Referenzpunkt bzw. welches Referenzflächensegment in dem Referenzkoordinatensystem davon betroffen ist. In Abhängigkeit von dem Ergebnis der letzten Prüfung 335 wird dann die entsprechende Funktions-oder Menüauswahl ausgelöst 340.

In dem besonderen Fall, daß die ausgelöste Funktion eine die gesamte Routine beendende Funktion ist, was in Schritt 342 zusätzlich geprüft wird, wird zu Schritt 343 gesprungen, in dem die Routine dann beendet wird.

In dem Fall, daß die Trajektorie die erste Schwellenfläche 215 tatsächlich durchstoßen hat, wird weiter geprüft 345, ob die Trajektorie bereits auch die zweite Schwellenfläche 220 durchstoßen hat. D.h. es wird auch hier geprüft 345, ob der Wert der aktuellen Position des Interaktionsgeräts 125 in den vorliegenden Referenzkoordinaten betragsmäßig den Wert der zweiten Schwelle überschreitet. Ist diese Bedingung nicht erfüllt, dann wird wieder zu Schritt 325 zurückgesprungen und ein neuer Positionswert des Interaktionsgeräts 125 erfaßt. Andernfalls wird das Referenzkoordinatensystem bzw. dessen mit dem IRP 205 zusammenfallender Urspung 350 nachgeführt bzw. an die derzeitige Position der Trajektorie des Interaktionsgeräts 125 ggf. inkrementell verschoben.

Es ist schließlich anzumerken, daß das vorbeschriebene Konzept des initialen Raumpunktes (IRP) grds. auch Benutzungsschnittstellen umfaßt, bei denen die Interaktion mittels einer reinen Rotation des Interaktionsgeräts 125 oder einer Kombination aus einer reinen Translation und einer reinen Rotation erfolgt. Im Falle einer Rotation kann der IRP als initialer Raumwinkel ϕ = 0° eines gedachten Kugel- oder Zylinderkoordinatensystems verstanden werden. Dabei können die beschriebenen beiden Schwellwerte durch diskrete Winkel wie bspw. ϕ = 90° bzw. ϕ = 180° gebildet sein, wobei dann bei einer Überschreitung von ϕ = 180° das genannte Koordinatensystem bspw. um den Winkel ϕ = 180° nachgeführt wird.

## Patentansprüche

1. Verfahren zur Steuerung eines Graphiksystems der virtuellen Realität (VR) mittels Interaktionen, wobei das VR-Graphiksystem eine Projektionseinrichtung zur Visualisierung virtuell-räumlicher Szenen aufweist und wobei die Interaktionen, mit dem VR-Graphiksystem mittels wenigstens eines Interaktionsgeräts erfolgen, welches zur Erfassung der jeweiligen Position und/oder Orientierung des Interaktionsgeräts auf einer physischen Raumtrajektorie und zur Erzeugung von entsprechenden Lagedaten und zur Übermittlung dieser Lagedaten an eine Lageerfassungseinrichtung das VR-Graphiksystems dient, wobei ein initialen Raumpunkt (205) auf der physischen Raumtrajektorie (200) des Interaktionsgeräts festgelegt wird und wobei eine Auswertung wenigstens einer nachfolgenden Interaktion relativ zu dem festgelegten initialen Raumpunkt (205) erfolgt, **dadurch gekennzeichnet, daß** mittels des initialen Raumpunktes (205) Referenzkoordinaten festgelegt werden, wobei die Auswertung der wenigstens einen nachfolgenden Interaktion relativ zu diesen Referenzkoordinaten erfolgt, und daß mittels des initialen Raumpunktes (205) und/oder mittels der Referenzkoordinaten wenigstens ein Schwellwert oder eine erste Schwellwertfläche gebildet wird, bei dessen oder deren Überschreitung durch die physische Raumtrajektorie (200) wenigstens eine Aktion oder Funktion des VR-Graphiksystems ausgelöst wird.

2. Verfahren nach Anspruch 1, **dadurch gekennzeichnet, daß** die erste Schwellwertfläche durch einen symmetrischen Raumkörper, insbesondere eine Kugel, einen Ellipsoid, einen Würfel, einen Quader oder dgl. gebildet wird.

3. Verfahren nach Anspruch 1 oder 2, **dadurch gekennzeichnet, daß** mittels des initialen Raumpunktes (205) und/oder der Referenzkoordinaten wenigstens eine zweite Schwellwertfläche gebildet wird, deren Abstand vom intialen Raumpunkt größer als derjenige der ersten Schwellwertfläche, bei deren Überschreitung durch die physische Raumtrajektorie (200) eine Verschiebung des Nullpunktes der Referenzkoordinaten in Richtung der Raumtrajektorie (200) ausgelöst wird.

4. Verfahren nach einem der vorhergehenden Ansprüche, **dadurch gekennzeichnet, daß** die Festlegung des initialen Raumpunktes (205) mittels einer ersten Interaktion erfolgt.

5. Verfahren nach Anspruch 4, **dadurch gekennzeichnet, daß** die erste Interaktion mittels des Interaktionsgeräts, insbesondere mittels eines an dem Interaktionsgerät angeordneten Steuerelements, oder mittels einer akustischen, sprachlichen oder gestischen Interaktion seitens eines Benutzers erfolgt.

6. Verfahren nach einem der vorhergehenden Ansprüche zur Anwendung in einem wenigstens ein räumlich-virtuelles Menüsystem oder Funktionsauswahlsystem aufweisenden VR-Graphiksystem, **dadurch gekennzeichnet, daß** die wenigstens eine nachfolgende Interaktion zur Steuerung des Menüsystems oder des Funktionsausurrahlsystems dient.

7. Verfahren nach Anspruch 6, **dadurch gekennzeichnet, daß** das Menüsystem oder das Funktionsauswahisystem aufgrund der ersten Interaktion in Abhängigkeit von der Blickrichtung und/oder der Kopfposition eines das Interaktionsgerät haltenden Benutzers in Bezug auf die Projektionseinrichtung in die virtuelle Szene eingeblendet wird, daß die Blickrichtung und/oder die Kopfposition kontinuierlich oder zeitweilig erfasst wird oder werden und daß die Position an der Projektionseinrichtung, an der das Menüsystem oder das Funktionsauswahlsystem eingeblendet wird oder werden, in Abhängigkeit von der erfassten Blickrichtung und/oder der erfassten Kopfposition bestimmt wird.

8. Verfahren nach Anspruch 6 oder 7, **dadurch gekennzeichnet, daß** eine durch eine Rotationsbewegung des Interaktionsgeräts zu bewirkende Aktion oder Funktion erst dann ausgelöst wird, wenn wenigstens-eine zweiten Interaktion, insbesondere mittels des Steuerelementes, ausgeführt wird.

9. Räumliche Benutzungsschnittstelle zur Steuerung eines Graphiksystems der virtuellen Realität (VR) mittels Interaktionen, wobei das VR-Graphiksystem eine Projektionseinrichtung zur Visualisierung virtuell-räumlicher Szenen aufweist und wobei die Interaktionen mit dem VR-Graphiksystem mittels wenigstens eines Interaktionsgeräts erfolgen, welches zur Erfassung der jeweiligen Position und/oder Orientierung des Interaktionsgeräts auf einer physischen Raumtrajektorie und zur Erzeugung von entsprechenden Lagedaten und zur Übermittlung dieser Lagedaten an eine Lageerfassungseinrichtung das VR-Graphiksystems dient, **gekennzeichnet durch** Mittel zur Erzeugung eines initialen Raumpunktes (205) auf der physischen Raumtrajektorie (200) des Interaktiorisgeräts und zur Auswertung wenigstens einer nachfolgenden Interaktion relativ zu dem festgelegten initialen Raumpunkt (205), **durch** Mittel zur Berechnung von virtuellen Referenzkoordinaten in Abhängigkeit des initialen Raumpunktes (205) und zur Auswertung der wenigstens einen nachfolgenden Interaktion relativ zu diesen Referenzkoordinaten und **durch** Mittel zur Berechnung wenigstens eines Schwellwerts oder einer ersten Schwellwertfläche in Abhängigkeit von den Referenzkoordinaten und Mittel zur Auslösung einer Aktion oder Funktion des VR-Graphiksystems bei einer Überschreitung des Schwellwerts oder der ersten Schwellwertfläche **durch** die physische Raumtrajektorie (200).

10. Benutzungsschnittstelle nach Anspruch 9, **gekennzeichnet durch** Mittel zur Berechnung wenigstens einer zweiten Schwellwertfläche in Abhängigkeit von den Referenzkoordinaten, deren Wert im Wesentlichen größer als der Wert der ersten Schwellwertfläche, sowie Mitteln zur Verschiebung des Nullpunktes der Referenzkoordinaten in Richtung der Raumtrajektorie bei einer Überschreitung der zweiten Schwellwertfläche **durch** die physische Raumtrajektorie (200).

11. Graphiksystem der virtuellen Realität (VR) arbeiten nach dem Verfahren nach einem der Ansprüche bis 8 und/oder aufweisend eine Benutzungssch nittstelle nach Anspruch 9 oder 10.

## Claims

1. A method for controlling a virtual reality (VR) graphic system by means of interactions, with the VR graphic system having a projection device for visualizing virtual-spatial scenes and with the interactions with the VR graphic system occurring by means of at least one interaction device which is used for detecting the respective position and/or orientation of the interaction device on a physical space trajectory and for generating respective position data and for transmitting such position data to a position data detection device of the VR graphic system, with an initial spatial point (205) being determined on the physical space trajectory (200) of the interaction device and with an evaluation of at least one subsequent interaction occurring relative to the determined initial spatial point (205), **characterized in that** reference coordinates are determined by means of the initial spatial point (205), with the evaluation of the at least one subsequent interaction occurring relative to these reference coordinates, and that at least one threshold value or a first threshold value area is formed by means of the initial spatial point (205) and/or by means of the reference coordinates, with at least one action or function of the VR graphic system being triggered upon exceeding said threshold value or threshold value area by the physical space trajectory (200).

2. A method according to claim 1, **characterized in that** the first threshold value area is formed by a symmetric spatial body, especially a sphere, an ellipsoid, a cube, a cuboid or the like.

3. A method according to claim 1 or 2, **characterized in that** at least one second threshold value area is formed by means of the initial spatial point (205) and/or the reference coordinates, the distance of which from the initial spatial point being larger than that of the first threshold value area, the exceeding of which by the physical space trajectory (200) triggers a displacement of the zero point of the reference coordinates in the direction of the space trajectory (200).

4. A method according to one of the preceding claims, **characterized in that** the determination of the initial spatial point (205) occurs by means of a first interaction.

5. A method according to claim 4, **characterized in that** the first interaction occurs by means of the interaction device, especially by means of a control element arranged on the interaction device, or by means of an acoustic, voice or gestural interaction on the part of the user.

6. A method according to one of the preceding claims for application in a VR graphic system having at least one spatial-virtual menu system or function selection system, **characterized in that** the at least one subsequent interaction is used for controlling the menu system or the function selection system.

7. A method according to claim 6, **characterized in that** the menu system or the function selection system will be inserted into the virtual scene as a result of the first interaction depending on the direction of view and/or the head position of a user holding the interaction device with respect to the projection device, that the direction of view and/or the head position will be detected continuously or temporarily, and that the position will be inserted in the projection device, in the menu system or the function selection system, depending on the detected direction of view and/or the detected head position.

8. A method according to claim 6 or 7, **characterized in that** an action or a function to be effected by a rotational movement of the interaction device will only be triggered when at least a second interaction is performed, especially by means of the control element.

9. A spatial usage interface for controlling a virtual reality (VR) graphic system by means of interaction, with the VR graphic system having a projection device for visualizing virtual-spatial scenes and with the interactions with the VR graphic system occurring by means of a least one interaction device which is used for detecting the respective position and/or orientation of the interaction device on a physical space trajectory and for generating respective position data and for transmitting such position data to a position data detection device of the VR graphic system, **characterized by** means for generating an initial spatial point (205) of the physical space trajectory (200) of the interaction device and for evaluating at least one subsequent interaction relative to the determined initial spatial point (205) by means for calculating virtual reference coordinates depending on the initial spatial point (205) and for evaluating the at least one subsequent interaction relative to said reference coordinates and by means for calculating at least one threshold value or a first threshold value area depending on the reference coordinates and means for triggering an action or function of the VR graphic system when the physical space trajectory (200) exceeds the threshold value or the first threshold value area.

10. A usage interface according to claim 9, **characterized by** means for calculating at least one second threshold value area depending on the reference coordinates, the value of which is substantially larger than the value of the first threshold value area, and means for displacing the zero point of the reference coordinates in the direction of the space trajectory when the physical space trajectory (200) exceeds of the second threshold value area.

11. A virtual reality (VR) graphic system, operating according to the method according to one of the claims 1 to 8 and/or comprising a usage interface according to claim 9 or 10.

## Revendications

1. Procédé de commande d'un système graphique de réalité virtuelle VR par des interactions, selon lequel :
- le système graphique VR comporte une installation de projection pour visualiser des scènes spatiales virtuelles, et
* les interactions avec le système graphique VR se font par l'intermédiaire d'au moins un appareil d'interaction qui sert à saisir la position et/ou l'orientation respectives de l'appareil d'interaction sur une trajectoire spatiale physique, à générer des données de position correspondantes et à transmettre ces données de position à une installation de saisie de position du système graphique VR,
* on fixe un point spatial initial (205) sur la trajectoire spatiale physique (200) de l'appareil d'interaction, et
* on exploite au moins une interaction suivante par rapport au point spatial initial fixé (205),
procédé **caractérisé en ce que**
- à l'aide du point spatial initial (205), on fixe des coordonnées de référence,
* on exploite au moins une interaction suivante par rapport à ces coordonnées de référence, et
- à l'aide du point spatial initial (205) et/ou à l'aide des coordonnées de référence, on forme au moins une valeur de seuil ou une première valeur surfacique de seuil qui, lorsqu'elle est atteinte ou dépassée par la trajectoire spatiale physique (200), déclenche au moins une action ou une fonction du système graphique VR.

2. Procédé selon la revendication 1,
**caractérisé en ce qu'**
on forme la première valeur surfacique de seuil par un corps tridimensionnel symétrique, notamment une sphère, un ellipsoïde, un cube, un quadrilatère ou corps analogue.

3. Procédé selon la revendication 1 ou 2,
**caractérisé en ce qu'**
à l'aide du point spatial initial (205) et/ou des coordonnées de référence, on forme au moins une seconde valeur surfacique de seuil dont la distance par rapport au point spatial initial, est supérieure à celle de la première valeur surfacique de seuil et dont le dépassement par la trajectoire spatiale physique (200) déclenche un déplacement du point zéro des coordonnées de référence dans la direction de la trajectoire spatiale (200).

4. Procédé selon l'une des revendications précédentes,
**caractérisé en ce que**
la fixation du point spatial initial (205) se fait à l'aide d'une première interaction.

5. Procédé selon la revendication 4,
**caractérisé en ce que**
la première interaction se fait à l'aide d'un appareil d'interaction, notamment à l'aide d'un élément de commande équipant l'appareil d'interaction ou à l'aide d'une interaction acoustique vocale ou gestuelle de la part d'un utilisateur.

6. Procédé selon l'une des revendications précédentes pour l'application d'un système graphique VR ayant au moins un système de menu spatial virtuel ou un système de sélection de fonction,
**caractérisé en ce qu'**
au moins une interaction suivante sert à la commande du système de menu ou du système de sélection de fonction.

7. Procédé selon la revendication 6,
**caractérisé en ce que**
le système de menu ou le système de sélection de fonction, sous l'effet de la première interaction, est incrusté dans la scène virtuelle en fonction de la direction du regard et/ou de la position de la tête d'un utilisateur tenant l'appareil d'interaction par rapport à l'installation de projection,
- la direction du regard et/ou la position de la tête étant saisies de manière continue ou périodique, et
- la position dans la direction de projection là où est incrusté le système de menu ou le système de sélection de fonction est déterminée en fonction de la direction du regard et/ou de la position de la tête, saisies.

8. Procédé selon la revendication 6 ou 7,
**caractérisé en ce qu'**
on déclenche une action ou une fonction par un mouvement de rotation de l'appareil d'interaction seulement si au moins une seconde interaction est exécutée notamment à l'aide de l'appareil de commande.

9. Interface d'utilisateur, spatiale, pour commander un système graphique de réalité virtuelle (VR) à l'aide d'interactions,
* le système graphique VR ayant une installation de projection pour visualiser des scènes spatiales, et
* les interactions se faisant avec le système graphique VR par l'intermédiaire d'au moins un appareil d'interaction servant à saisir la position et/ ou l'orientation respectives de l'appareil d'interaction sur une trajectoire spatiale physique, à générer des données de position correspondantes et à transmettre ces données de position à une installation de saisie de position du système graphique VR, interface **caractérisée par**
- des moyens pour générer un point spatial initial (205) sur la trajectoire spatiale physique (200) de l'appareil d'interaction et pour exploiter au moins une interaction suivante par rapport au point spatial initial (205) fixé,
- des moyens pour calculer des coordonnées de référence virtuelles en fonction du point spatial initial (205) et pour exploiter au moins une interaction suivante par rapport à ces coordonnées de référence, et
- des moyens pour calculer au moins une valeur de seuil ou une première surface de valeur de seuil en fonction des coordonnées de référence, et
- des moyens pour déclencher une action ou une fonction du système graphique VR lors d'un dépassement de la valeur de seuil ou de la première valeur surfacique de seuil par la trajectoire spatiale physique (200).

10. Interface d'utilisateur selon la revendication 9,
**caractérisée par**
- des moyens pour calculer au moins une seconde valeur surfacique de seuil en fonction des coordonnées de référence dont la valeur est essentiellement supérieure à la valeur de la première valeur surfacique de seuil ainsi que
- des moyens pour décaler le point zéro des coordonnées de référence dans la direction de la trajectoire spatiale en cas de dépassement de la seconde valeur surfacique de seuil par la trajectoire spatiale physique (200).

11. Système graphique de réalité virtuelle (VR) fonctionnant selon le procédé de l'une des revendications 1 à 8 et/ou comportant une interface d'utilisateur selon la revendication 9 ou 10.
